# EUROPEAN PATENT APPLICATION

(11) **EP 4 418 730 A1**
(43) Date of publication of application: **21.08.2024**
(21) Application number: 22880366.4
(22) Date of filing: 13.10.2022
(51) Int. Cl.: H04W 28/24

(54) **BEARER CONFIGURATION METHOD, NETWORK SIDE DEVICE, AND TERMINAL**

(30) Priority: 14.10.2021 CN 202111200149
(71) Applicant: Vivo Mobile Communication Co., Ltd., Dongguan, Guangdong 523863 (CN)
(72) Inventor: LIU, Jiamin, Dongguan, Guangdong 523863 (CN); BAO, Wei, Dongguan, Guangdong 523863 (CN)
(74) Representative: Murgitroyd & Company
(86) International application number: PCT/CN2022/125040
(87) International publication number: WO 2023/061430

(57) **Abstract**

This application discloses a bearer configuration method, a network side device, and a terminal, belonging to the technical field of wireless communications. The bearer configuration method in an embodiment of this application includes: transmitting, by a radio access network (RAN) node, first configuration information to first user equipment (UE), where the first configuration information is used for configuring a bearer for multi-UE cooperative transmission.

## Description

### CROSS-REFERENCE TO RELATED APPLICATION

This application claims priority to Chinese Patent Application No. 202111200149.0 filed on October 14, 2021, which is incorporated herein by reference in its entirety.

### TECHNICAL FIELD

This application belongs to the technical field of wireless communications, and specifically relates to a bearer configuration method, a network side device and a terminal.

### BACKGROUND

In existing mechanisms, one user equipment (User Equipment, UE) establishes its own control plane connection and user plane connection with a core network, such as a protocol data unit (Protocol Data Unit, PDU) session (session). When the UE moves between different cells, different base stations, or even different core network nodes, a network side transfers the control plane connection and user plane connection of the UE and a transmission state between different network nodes, thus ensuring that the service transmission of the UE can be continuous and uninterrupted and can meet lossless requirements as needed.

When data transmission is performed between two UE, each of the two UE establishes its own control plane connection and user plane connection of a core network or an access network, for example, a non access stratum (Non Access Stratum, NAS) connection (core network control plane), a radio resource control (Radio Resource Control, RRC) connection (access network control plane), a PDU session (core network user plane), a data radio bearer (Data Radio Bearer, DRB), and a quality of service (Quality of Service, QoS) flow (flow) (access network user plane) are all independent in the two UE. Therefore, the multi-UE cooperative transmission cannot be achieved in the prior art.

### SUMMARY

Embodiments of this application provide a bearer configuration method, a network side device and a terminal, which can solve the problem of inability to achieve multi-UE cooperative transmission in the prior art.

According to a first aspect, a bearer configuration method is provided, including: transmitting, by a radio access network (RAN) node, first configuration information to first user equipment (UE), where the first configuration information is used for configuring a bearer for multi-UE cooperative transmission.

According to a second aspect, a bearer configuration apparatus is provided, including: a first obtaining module, configured to obtain first configuration information of first UE, where the first configuration information is used for configuring a bearer for multi-UE cooperative transmission; and a first transceiver module, configured to transmit the first configuration information to the first UE.

According to a third aspect, a method for configuring multi-UE cooperative transmission is provided, including: transmitting, by a core network device, association information to an RAN node, where the association information is used for indicating that first UE and second UE have an association, and the first UE and the second UE have an ability to establish multi-UE cooperative transmission.

According to a fourth aspect, an apparatus for configuring multi-UE cooperative transmission is provided, including: a second obtaining module, configured to obtain association information, where the association information is used for indicating that first UE and second UE have an association, and the first UE and the second UE have an ability to establish multi-UE cooperative transmission; and a second transceiver module, configured to transmit the association to an RAN node.

According to a fifth aspect, a method for requesting multi-UE cooperative transmission is provided, including: transmitting, by first UE, a first request to an RAN node, where the first request is used for requesting the RAN node to configure a bearer for multi-UE cooperative transmission for the first UE, and the first request carries an identifier of second UE.

According to a sixth aspect, an apparatus for requesting multi-UE cooperative transmission is provided, including: a first determining module, configured to determine that first UE needs to execute multi-UE cooperative transmission; and a third transceiver module, configured to transmit a first request to an RAN node, where the first request is used for requesting the RAN node to configure a bearer for multi-UE cooperative transmission for the first UE, and the first request carries an identifier of second UE.

According to a seventh aspect, a method for responding to multi-UE cooperative transmission is provided, including: receiving, by second UE, second configuration information transmitted by an RAN node, where the second configuration information is used for indicating bearer configuration of the second UE for multi-UE cooperative transmission for first UE; and applying, by the second UE, the second configuration information to transmit a configuration completion message to the RAN node in the case of agreeing multi-UE cooperative transmission for the first UE.

According to an eighth aspect, an apparatus for responding to multi-UE cooperative transmission is provided, including: a fourth transceiver module, configured to receive second configuration information transmitted by an RAN node, where the second configuration information is used for indicating bearer configuration of the second UE for multi-UE cooperative transmission for the first UE, and a second determining module, configured to determine whether to agree multi-UE cooperative transmission for the first UE; and the fourth transceiver module is further configured to allow the second UE to apply the second configuration information to transmit a configuration completion message to the RAN node in the case of agreeing multi-UE cooperative transmission for the first UE.

According to a ninth aspect, a terminal is provided. The terminal includes a processor, a memory, and a program or an instruction stored in the memory and executable on the processor. The program or instruction, when executed by the processor, implements the steps of the method according to the fifth aspect, or implements the steps of the method according to the seventh aspect.

According to a tenth aspect, a terminal is provided, including a processor and a communication interface, where the processor is configured to implement the steps of the method according to the first aspect, or implement the steps of the method according to the seventh aspect, and the communication interface is configured to communicate with an external device.

According to an eleventh aspect, a network side device is provided. The network side device includes a processor, a memory, and a program or an instruction stored in the memory and executable on the processor. The program or instruction, when executed by the processor, implements the steps of the method according to the first aspect, or implements the steps of the method according to the third aspect.

According to a twelfth aspect, a network side device is provided, including a processor and a communication interface, where the processor is configured to implement the steps of the method according to the first aspect, or implement the steps of the method according to the third aspect, and the communication interface is configured to communicate with an external device.

According to a thirteenth aspect, a readable storage medium is provided. The readable storage medium stores a program or an instruction. The program or instruction, when executed by a processor, implements the steps of the method according to the first aspect, or implements the steps of the method according to the third aspect, or implements the steps of the method according to the fifth aspect, or implements the steps of the method according to the seventh aspect.

According to a fourteenth aspect, a chip is provided. The chip includes a processor and a communication interface. The communication interface is coupled with the processor. The processor is configured to execute the program or instruction to implement the steps of the method according to the first aspect, or implement the steps of the method according to the third aspect, or implement the steps of the method according to the fifth aspect, or implement the steps of the method according to the seventh aspect.

According to a fifteenth aspect, a computer program/program product is provided. The computer program/program product is stored in a non-transient storage medium. The computer program/program product is executed by at least one processor to implement the steps of the method according to the first aspect, or implement the steps of the method according to the third aspect, or implement the steps of the method according to the fifth aspect, or implement the steps of the method according to the seventh aspect.

In the embodiments of this application, a radio access network (Radio Access Network, RAN) node can transmit a first configuration to first UE to configure a bearer for multi-UE cooperative transmission, so that the first UE can perform multi-UE cooperative transmission.

### BRIEF DESCRIPTION OF THE DRAWINGS

FIG. 1 is a schematic diagram of a wireless communication system applicable to an embodiment of this application;
FIG. 2 is a schematic flowchart of a bearer configuration method provided in an embodiment of this application;
FIG. 3a is a schematic diagram of a multi-UE transmission architecture provided in an embodiment of this application;
FIG. 3b is a schematic diagram of another multi-UE transmission architecture provided in an embodiment of this application;
FIG. 3c is a schematic diagram of still another multi-UE transmission architecture provided in an embodiment of this application;
FIG. 4 is a schematic flowchart of a method for configuring multi-UE cooperative transmission provided in an embodiment of this application;
FIG. 5 is a schematic flowchart of a method for configuring multi-UE cooperative transmission provided in an embodiment of this application;
FIG. 6 is a schematic flowchart of a method for responding to multi-UE cooperative transmission provided in an embodiment of this application;
FIG. 7 is a schematic flowchart of a method for establishing a bearer for multi-UE cooperative transmission provided in an embodiment of this application;
FIG. 8 is another schematic flowchart of a method for establishing a bearer for multi-UE cooperative transmission provided in an embodiment of this application;
FIG. 9 is a schematic structural diagram of a bearer configuration apparatus provided in an embodiment of this application;
FIG. 10 is a schematic structural diagram of an apparatus for configuring multi-UE cooperative transmission provided in an embodiment of this application;
FIG. 11 is a schematic structural diagram of an apparatus for configuring multi-UE cooperative transmission provided in an embodiment of this application;
FIG. 12 is a schematic structural diagram of an apparatus for responding to multi-UE cooperative transmission provided in an embodiment of this application;
FIG. 13 is a schematic structural diagram of a communication device provided in an embodiment of this application;
FIG. 14 is a schematic diagram of hardware structures of a terminal provided in an embodiment of this application; and
FIG. 15 is a schematic diagram of hardware structures of a network side device provided in an embodiment of this application.

### DETAILED DESCRIPTION

The technical solutions in the embodiments of this application are clearly described below with reference to the accompanying drawings in the embodiments of this application. Apparently, the described embodiments are merely some rather than all of the embodiments of this application. All other embodiments obtained by those of ordinary skill in the art based on the embodiments of this application fall within the scope of protection of this application.

In the specification and claims of this application, the terms such as "first" and "second" are used for distinguishing similar objects, rather than describing a specific sequence or order. It is to be understood that the terms used in such a way are exchangeable in a proper case, so that the embodiments of this application may be implemented in an order different from those shown or described herein. Moreover, the objects distinguished by "first" and "second" are usually of the same category, and the number of the objects is not limited, for example, there may be one or more first objects. In addition, in the specification and claims, "and/or" indicates at least one of the connected objects, and the character "/" generally indicates that the associated objects before and after it are in an "or" relationship.

It is worth noting that the technology described in the embodiments of this application is not limited to long term evolution (Long Term Evolution, LTE)/LTE-advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often interchangeably used, and the described technology can be applied to the systems and radio technologies mentioned above, and can also be applied to other systems and radio technologies. The following describes a new radio (New Radio, NR) system as an example, and the NR term is used in most of the following descriptions. However, these technologies can also be applied to applications other than the NR system, e.g., the 6th generation (6th Generation, 6G) communication system.

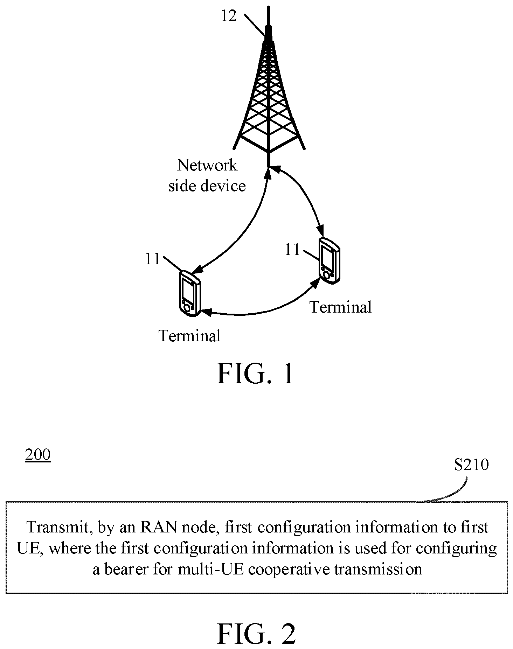

FIG. 1 is a schematic diagram of a wireless communication system applicable to an embodiment of this application. The wireless communication system includes a terminal 11 and a network side device 12. The terminal 11 may also be referred to as a terminal device or user equipment (User Equipment, UE). The terminal 11 may be a mobile phone, a tablet personal computer (Tablet Personal Computer), a laptop computer (Laptop Computer) or also known as a notebook computer, a personal digital assistant (Personal Digital Assistant, PDA), a handheld computer, a netbook, an ultra-mobile personal computer (Ultra-Mobile Personal Computer, UMPC), a mobile Internet device (Mobile Internet Device, MID), a wearable device (Wearable Device) or vehicle user equipment (VUE), pedestrian user equipment (PUE), and other terminal side devices. The wearable devices include: smart watches, wristbands, headphones, glasses, and the like. It should be noted that the specific type of the terminal 11 is not limited in the embodiments of this application. The network side device 12 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or some other appropriate terms in the art. As long as the same technical effects are achieved, the base station is not limited to specific technical terms. It should be noted that in the embodiments of this application, a base station in an NR system is taken only as an example, but the specific type of the base station is not limited.

The bearer configuration method, network side device and terminal provided in the embodiments of this application are described in detail below through some embodiments and application scenarios thereof with reference to the accompanying drawings.

FIG. 2 is a schematic flowchart of a bearer configuration method provided in an embodiment of this application. The method 200 may be executed by an RAN node. In other words, the method may be executed by software or hardware installed on an RAN node. As shown in FIG. 2, the method may include the following steps:

S210: An RAN node transmits first configuration information to first UE, where the first configuration information is used for configuring a bearer for multi-UE cooperative transmission.

In this embodiment of this application, the RAN node may be a base station or a centralized unit (Centralized Unit, CU), which is not specifically limited in this embodiment of this application.

In related technologies, the access network connections or core network connections of different UE are independent of each other, and each UE can only perform service transmission independently. However, in actual use, users may need joint transmission of services between two UE. For example, when a user is preparing to go for a run while listening to music/books with a mobile phone indoors, the user hopes that a wristband can continuously receive related services, thus providing the user with continuous service experience. Or, in a case that the transmission power of one UE is limited or the uplink transmission rate is insufficient, the transmission power and transmission capacity of two or more UE can be used for joint transmission. Or, when the service of the user has higher reliability, a connection backup can be established between two or more UE, and the current link used for transmission can be determined according to the link quality to meet the transmission requirements of low time delay and high reliability. However, these scenarios cannot be supported in existing architectures and mechanisms. The user needs to set the reception and reception progress of a service on a new device manually or through a service layer to achieve an effect of continuous reception, or the link change is achieved by hard handover to reduce the convenience of the experience and the QoS experience effect of the user. In the technical solution provided in this embodiment of this application, the RAN node configures a bearer for multi-UE cooperative transmission for the first UE, so that the first UE can be used for multi-UE cooperative transmission to improve the convenience of service transmission and the QoS experience effect of the user.

Optionally, the first configuration information may include: an identifier of second UE, and configuration information of a bearer architecture.

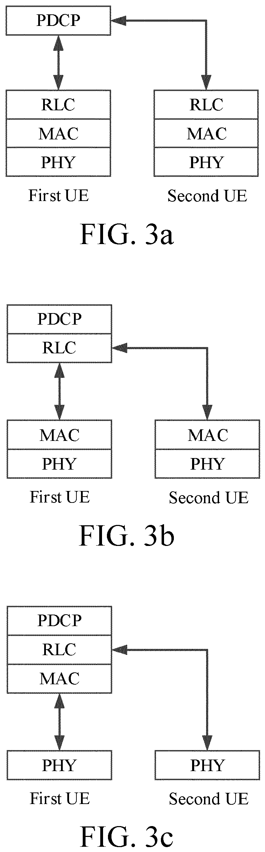

In this embodiment of this application, the configuration information of the bearer architecture refers to the multi-UE architecture configuration for multi-UE cooperative transmission (also known as aggregation transmission, backup transmission, or switching transmission), which may include the configuration information of at least one of a packet data convergence protocol (Packet Data Convergence Protocol, PDCP) anchor (anchor) architecture shown in FIG. 3a, a radio link control (Radio Link Control, RLC) anchor architecture shown in FIG. 3b, and a medium access control (Medium Access Control, MAC) anchor architecture shown in FIG. 3c.

Certainly, it is not limited to this. In addition to the architectures shown in FIG. 3a to FIG. 3c, the multi-UE architecture may also adopt other architectures. For example, some common functions (common function) of a certain layer (such as PDCP or MAC) are set on the first UE, and a split function (split function) is set on the second UE.

In specific applications, a protocol can select one or more architectures. If one architecture is selected, the first configuration information includes the configuration of a protocol entity related to the architecture. If two or more architectures are adopted, the RAN node can select and configure different architectures as needed. Details are not specifically limited in this embodiment of this application.

In a possible implementation, in order to avoid the case that the second UE does not agree the multi-UE cooperative transmission with the first UE and consequentially the first UE also needs to release the newly established bearer for multi-UE cooperative transmission, the method may further include: before the RAN node transmits the first configuration information to the first UE, the method further includes: the RAN node transmits second configuration information to the second UE, where the second configuration information is used for indicating bearer configuration of the second UE for multi-UE cooperative transmission for the first UE; and the RAN node receives a configuration completion message returned by the second UE. By adopting this possible implementation, the RAN node first transmits the second configuration information to the second UE, and then transmits the first configuration information to the first UE after receiving the configuration completion message transmitted by the second UE, so that after the second UE agrees the multi-UE cooperative transmission with the first UE, the bearer of the first UE can be reconfigured to avoid the waste of the process.

In this embodiment of this application, the RAN node can independently determine to transmit the first configuration information to the first UE, or can transmit the first configuration information to the first UE under the trigger of the core network, or can transmit the first configuration information to the first UE under the request of the first UE. The details are respectively described below.

### (I) Core network trigger

In this possible implementation, before S210, the method may further include: the RAN node receives association information transmitted by the core network, where the association information is used for indicating an association between the first UE and the second UE.

The multi-UE architecture involves deep cooperation between two or more UE, which requires the use of transmission capabilities and transmission hardware resources of other UE as well as involves some billing and security factors, so a typical scenario is that users who need to perform multi-UE architecture transmission first sign contracts and the like to make their associations (also known as binding relationships) static. For example, a mobile phone of a user and wearable devices and even home devices can be signed to initialize their associations. For another example, due to the need for cooperative work, specific devices in a factory can also be pre-initialized to obtain their associations.

Generally, the association in the signing process or pre-initialization process needs to be stored in the core network node, and the core network node is responsible for verifying the effectiveness of the association.

Optionally, the signed or preset association may include one of the following:
(1) a group of UE lists with associations, where the UE in the list may perform cooperative transmission with each other, and each UE may be determined as primary UE (P-UE) or secondary UE (S-UE) according to needs;
(2) a group of UE lists with associations, where the attribute P-UE or S-UE of each UE is preset in advance; and
(3) a group of UE lists with associations, where the attribute that can be supported by each UE, such as P-UE only, S-UE only or both P-UE and S-UE, is set.

The above association may be based on the granularity of UE, that is, any service between these UE may perform multi-UE architecture establishment and transmission; and the above association may also be further based on the granularity of a specific service, that is, on the basis of the UE list, these UE is limited to only perform multi-UE architecture establishment and transmission for what kind of services, where service limitations may include a service identifier, a specific QoS parameter of a service, a range of the specific QoS parameter of the service, and the like.

The above primary UE (Primary UE, P-UE) is the UE initiated by the service or a high-layer protocol for a service source/service transmission is located in the UE. The secondary UE (Secondary UE, S-UE) is configured to assist the primary UE in service transmission, generally only has a lower protocol layer of a transmission protocol, and only completes the related function of assisting transmission.

The core network stores the association in the above signing process or pre-initialization process, and transmits the association to the RAN node when needed, thus facilitating the RAN node to perform subsequent configuration of the multi-UE architecture. In a possible implementation, the association information transmitted from the core network to the RAN node may include at least one of the following:
(1) a UE identifier list with associations, where the UE identifier list includes an identifier of the first UE and an identifier of the second UE; for example, a UE ID list with binding relationships, where the UE ID may be a global unique identifier, a UE identifier in a public land mobile network (Public Land Mobile Network, PLMN), an identifier in an access and mobility management function (Access and Mobility Management Function, AMF), an identifier in a gNB/CU, an S-temporary mobile subscription identifier (S-Temporary Mobile Subscription Identifier, S-TMSI), an AMF UE ID, a gNB UE ID, or the like;
(2) first service identification information, where the first service identification information is used for indicating a service capable of executing multi-UE cooperative transmission, that is, indicating that each UE in the UE identifier list has an association based on a specific service, and the first service identification information may be a service identifier (service ID, service code, QoS flow ID, or the like) or a service feature, for example, a service that meets the condition that a QoS parameter is equal to a certain value or within a specific interval; and
(3) attributes of each UE in the UE identifier list with associations, for example, P-UE only, S-UE only, or both P-UE and S-UE.

In this possible implementation, the core network device can transmit the association information to the RAN node in at least one of the following cases:
(1) The core network (CN) device learns that both the first UE and the second UE are in a connected state. Because the CN can obtain the UE in a connected state activated under the RAN node from the information reported in real time by the RAN node, the CN can transmit the association information of the UE with associations to the RAN node.
(2) The core network device discovers that the first UE enters a connected state, where the first UE and the second UE have an association based on any service. For example, after one UE enters a connected state, if the core network device discovers that the UE has an association, the association information of the UE is transmitted to the service RAN node of the UE.
(3) The core network device discovers that the first UE enters a connected state and a first service is initiated, where the first UE and the second UE have an association based on a target service, and the target service includes the first service. For example, after one UE enters a connected state and a service is initiated, if the core network device discovers that the UE has an association based on the service, the association information of the UE is transmitted to the service RAN node of the UE.
(4) A second request transmitted by the RAN node is received, where the second request is used for requesting all UE associated with the first UE, or the second request is used for requesting UE that has an association with the first UE based on a second service. That is, the RAN node actively transmits a request to the CN node, for example, the RAN node transmits a request to the CN node according to a requirement (the requirement may be judged by the RAN node, or may be triggered after the UE transmits a request to the RAN node). The RAN node may request the binding relationships of all their subordinate UE, or binding relationships of specific UE, or binding relationships of specific services of specific UE.

According to the technical solution provided in this embodiment of this application, the RAN node can respectively configure a bearer for multi-UE cooperative transmission for the first UE and the second UE under the trigger of the core network device, so that the cooperative transmission between the first UE and the second UE can be achieved.

### (II) Self-determination of RAN node

In this possible implementation, the RAN node can transmit the first configuration information to the first UE when it is determined that a first condition is met.

Optionally, the first condition includes, but is not limited to, at least one of the following:
(1) The RAN node obtains the association information between the first UE and the second UE from a core network. For example, the CN transmits the association between UE to the RAN node, so as to learn that the cooperative transmission (or aggregation/backup/switching transmission) may be or needs to be performed between the UE.
(2) The RAN node, as a service node of the first UE, determines that the first UE and the second UE with an association are in a connected state. For example, when the RAN node, as a service node of the UE, discovers that two or more UE with a binding relationship enters a connected state, there is a feasibility of establishing cooperative/aggregation/backup/switching transmission.
(3) The RAN node, as a service node of the first UE, determines that at least some of service transmissions of the first UE cannot meet QoS requirements or service experience requirements. The RAN node pages the second UE to determine that the second UE enters a connected state. For example, if the RAN node, as a service node of the P-UE, discovers that one or more service transmissions of the P-UE cannot meet QoS requirements or service experience requirements, it is possible to actively page the corresponding S-UE within the coverage range of the RAN node to enable the S-UE to enter a connected state, thus performing the cooperative/aggregation/backup/switching transmission for the P-UE.
(4) At least some of the current services of the first UE have the feature of supporting multi-UE transmission. For example, the current service of the P-UE has the feature of supporting the cooperative/aggregation/backup/switching transmission.

In a possible implementation, in order to ensure the communication between the first UE and the second UE, after the RAN node determines that a predetermined condition is met and before the first configuration information is transmitted to the first UE, the method may further include: the RAN node determines that a transmission distance and/or a link situation between the first UE and the second UE meets multi-UE transmission requirements. For example, the RAN node may judge according to information such as location or a home cell or inquire the first UE to obtain the transmission distance and/or the link situation between the first UE and the second UE.

After meeting the above precondition, the RAN can determine at least one of the following: there is an association permitted by the CN between the first UE and the second UE, the first UE and the second UE are located under the same base station, the first UE and the second UE can communicate with each other, and the service of the first UE has the feature of establishing a multi-UE architecture bearer. Therefore, the RAN node can initiate a process of establishing a multi-UE architecture. For example, the process may include the following steps:

Step 1: The RAN node transmits a reconfiguration message to the second UE, where the reconfiguration message carries second configuration information.

Optionally, the second configuration information may include: an identifier of the first UE, configuration of a split bearer (split bearer), and the like, so that the second UE can judge whether to agree to establish a multi-UE cooperative transmission architecture for the first UE.

Optionally, the second configuration information may further include a second DRB identifier for indicating a service bearer of the second UE for multi-UE cooperative transmission for the first UE. Through the second DRB identifier, the second UE can judge whether to agree the multi-UE cooperative transmission for the designated DRB (that is, the DRB corresponding to the second DRB identifier) of the first UE.

Step 2: If the second UE agrees the multi-UE cooperative transmission, the configuration is completed according to the indication of the received reconfiguration message, and a configuration completion message is returned to the network side (that is, the RAN node); and
if the second UE does not agree the multi-UE cooperative transmission, the process is ended.

Step 3: The RAN node transmits a reconfiguration message to the first UE, where the reconfiguration message carries first configuration information.

Optionally, the first configuration information may include: an identifier of the second UE and the information and related configuration of a bearer architecture, so that the first UE can learn that a multi-UE transmission architecture is established with the second UE, and the configuration is completed according to the indication of the received reconfiguration message.

Optionally, the first configuration information may further carry a third DRB-ID for indicating a service bearer for multi-UE cooperative transmission configured for the first UE.

Step 4: The first UE returns a configuration completion message to the network side.

Then, the first UE can transmit a data packet with the designated DRB ID to the second UE, and the second UE transmits the data packet to the network side. The downlink transmission is also similar.

It should be noted that the function of the above second DRB ID and third DRB ID is to enable the second UE and the first UE to obtain the association of the split bearer. For example, for a DRB (whose bearer identifier is DRB ID1) which is split into a locale identifier (LCID1) located in the first UE and an LCID2 located in the second UE, when the RAN node configures the first configuration information and the second configuration information, the association may be configured in the following ways:
the first UE is configured with the DRB ID1 which is split to the LCID1 of the first UE and the LCID2 of the second UE (that is, the third DRB identifier), the second UE is configured with the LCID2 (that is, the second DRB identifier), and it can be learned that all data flows are associated to the DRB1 through the LCID2 between the first UE and the second UE; and

(2) the first UE is configured with the DRB ID1 which is associated to the LCID1 of the first UE (that is, the third DRB identifier), the second UE is configured with the LCID2 which is associated to the DRB ID1 of the first UE (that is, the second DRB identifier), and it can be learned that two data flows are associated to the same DRB1 through the DRB ID1 between the first UE and the second UE.

In this possible implementation, the RAN node can also inquire the first UE whether to establish a multi-UE architecture, or inquire the first UE whether to establish a multi-UE architecture for a specific service, and after a positive response returned by the first UE is received, S210 is executed. For example, the RAN node can inquire the first UE after determining that the first condition is met.

The RAN node also needs to inquire the second UE whether to agree the establishment of a multi-UE architecture or a multi-UE architecture based on a specific service, and after agreement, the multi-UE architecture or the multi-UE architecture based on the specific service is configured, that is, the bearer for multi-UE cooperative transmission is configured.

Through this possible implementation, the RAN node can configure the bearer for multi-UE cooperative transmission or configure the bearer for multi-UE cooperative transmission based on a specific service when the first condition is met, so that the multi-UE cooperative transmission can be achieved.

### (III) First UE request

In this possible implementation, before S210, the method may further include: a first request transmitted by the first UE is received, where the first request is used for requesting the first configuration information, and the first request carries an identifier of the second UE. Through the first request, the first UE requests the cooperative transmission (also known as aggregation transmission, backup transmission or switching transmission) with the second UE from the RAN node.

Optionally, the first request may further carry second service identification information for indicating service information of the first UE expecting multi-UE cooperative transmission.

For example, the second service identification information includes, but is not limited to, at least one of the following:
(1) a first data radio bearer (DRB) identifier, where the first DRB identifier may be an identifier of the DRB that has been established by the first UE currently;
(2) a service identifier (Service ID), where the service identifier may be a service identifier that is transmitted currently or needs to be transmitted subsequently by the first UE;
(3) a QoS flow identifier (QoS flow ID), where the QoS flow identifier may be a QoS flow identifier that is transmitted currently or needs to be transmitted subsequently by the first UE; and
(4) service feature information, for example, a QoS parameter value is equal to a certain value or within a certain interval, and the service of the first UE expecting multi-UE cooperative transmission can be determined based on the feature information.

In a possible implementation, after receiving the first request transmitted by the first UE, the RAN node transmits second configuration information to the second UE, where the second configuration information is used for indicating bearer configuration of the second UE for multi-UE cooperative transmission for the first UE.

The second configuration information is the same as the second configuration information in the above possible implementation, which may specifically refer to the related description in the above implementation and will not be described here.

In a possible implementation, after the RAN node transmits the second configuration information to the second UE, if the RAN node receives a configuration completion message transmitted by the second UE, it indicates that the second UE agrees the multi-UE cooperative transmission for the first UE, and then, the RAN node transmits a reconfiguration message to the first UE, where the reconfiguration message carries the first configuration information.

The first configuration information is the same as the first configuration information in the above possible implementation, which may specifically refer to the related description in the above implementation and will not be described here.

In specific applications, after establishing the above multi-UE cooperative transmission, due to certain reasons, such as change in the service transmission of the first UE, change in the service transmission of the second UE, or change in the load of the RAN node, it is necessary to modify or release the bearer for multi-UE cooperative transmission. Therefore, after establishing the above bearer for multi-UE cooperative transmission, it may be necessary to modify or release the bearer.

Therefore, in a possible implementation, after S210, the method may further include:
step 1: the RAN node transmits a first reconfiguration command to the second UE, where the first reconfiguration command carries an identifier of the first UE, a reconfigured first bearer identifier and reconfigured content information, and a bearer corresponding to the first bearer identifier is the bearer for multi-UE cooperative transmission; and
step 2: the RAN node transmits a second reconfiguration command to the first UE, where the second reconfiguration command carries an identifier of the second UE, the first bearer identifier and the reconfigured content information.

It should be noted that step 1 and step 2 are not executed in a strict sequence, that is, the RAN node may first transmit the first reconfiguration command to the second UE and then transmit the second reconfiguration command to the first UE, or may first transmit the second reconfiguration command to the first UE and then transmit the first reconfiguration command to the second UE, which is not specifically limited in this embodiment of this application. For example, as an optional solution, the RAN node can transmit the second reconfiguration command to the first UE after receiving the reconfiguration completion message transmitted by the second UE.

Optionally, after the RAN node transmits the second reconfiguration command to the first UE, the RAN node can also receive the reconfiguration completion message transmitted by the first UE, so that the RAN node can learn that the first UE completes the reconfiguration.

In another possible implementation, after S210, the method may further include:
step 1: the RAN node transmits a first release command to the second UE, where the first release command carries an identifier of the first UE, a released second bearer identifier and released content information, and a bearer corresponding to the second bearer identifier is the bearer for multi-UE cooperative transmission; and
step 2: the RAN node transmits a second release command to the first UE, where the second release command carries an identifier of the second UE, the second bearer identifier and released content information.

It should be noted that step 1 and step 2 are not executed in a strict sequence, that is, the RAN node may first transmit the first release command to the second UE and then transmit the second release command to the first UE, or may first transmit the second release command to the first UE and then transmit the first release command to the second UE, which is not specifically limited in this embodiment of this application. For example, as an optional solution, the RAN node can transmit the second release command to the first UE after receiving the release completion message transmitted by the second UE.

Optionally, after the RAN node transmits the second release command to the first UE, the RAN node can also receive the release completion message transmitted by the first UE, so that the RAN node can learn that the first UE completes the release.

Because the multi-UE architecture is a joint transmission architecture established among the RAN node, the first UE and the second UE, the RAN node, the first UE and the second UE may all propose modifications to the joint transmission architecture (that is, the above multi-UE architecture, or multi-UE transmission architecture, or multi-UE cooperative transmission architecture). For example, the first UE or the second UE can transmit a request to the network, and after the network agrees the request, the modification process can be executed.

Therefore, in a possible implementation, before the RAN node transmits the first reconfiguration command to the second UE, the method further includes: a modification request transmitted by the first UE or the second UE is received, where the modification request is used for requesting modification of the bearer corresponding to the first bearer identifier.

Or, before the RAN node transmits the first release command to the second UE, the method further includes: a release request transmitted by the first UE or the second UE is received, where the release request is used for requesting release of the bearer corresponding to the second bearer identifier.

Certainly, it is not limited to this. As a centralized control entity, the RAN node has direct decision-making power. For example, when the RAN node has a higher load and cannot support this multi-UE transmission architecture, the RAN node can modify some or all of the bearers for multi-UE cooperative transmission. For another example, when the service of the UE ends, the RAN node can directly release the bearer for multi-UE cooperative transmission.

After modification or release, the multi-UE architecture bearer is not used subsequently, or the new configuration is used for transmission.

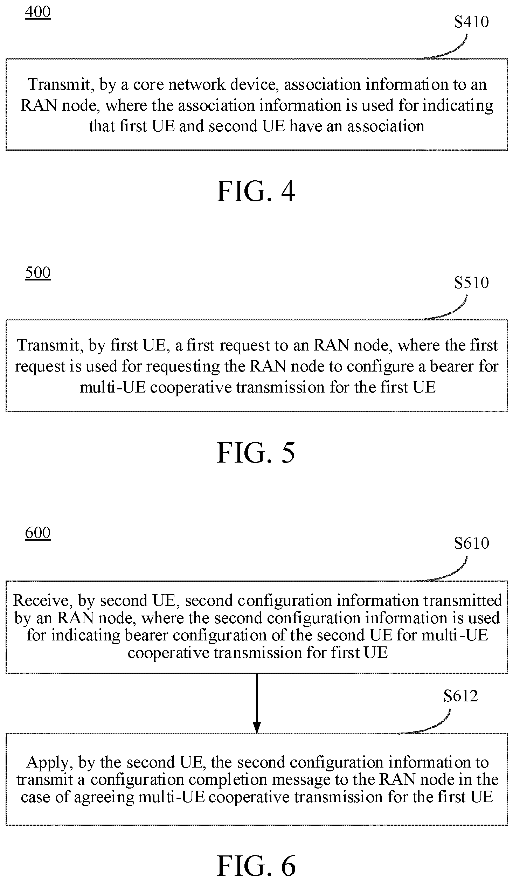

FIG. 4 is a flowchart of a method for configuring multi-UE cooperative transmission provided in an embodiment of this application. The method 400 may be executed by a core network device. In other words, the method may be executed by software or hardware installed on a core network device. As shown in FIG. 4, the method may include the following step:

S410: A core network device transmits association information to an RAN node, where the association information is used for indicating that first UE and second UE have an association, and the first UE and the second UE have an ability to establish multi-UE cooperative transmission.

The method 400 provided in this embodiment of this application is the execution process of the core network side corresponding to the method 200, has implementations corresponding to possible implementations related to the core network device involved in the method 200, and may specifically refer to the description of the method 200. The following only describes the possible implementations of the steps related to the core network device.

In a possible implementation, before the core network device transmits the association information to the RAN node, the method further includes at least one of the following:
(1)the core network device learns that both the first UE and the second UE are in a connected state;
(2) the core network device discovers that the first UE enters a connected state, where the first UE and the second UE have an association based on any service;
(3) the core network device discovers that the first UE enters a connected state and a first service is initiated, where the first UE and the second UE have an association based on a target service, and the target service includes the first service; and
(4) a second request transmitted by the RAN node is received, where the second request is used for requesting all UE associated with the first UE, or the second request is used for requesting UE that has an association with the first UE based on a second service.

Optionally, the association information transmitted by the core network device to the RAN node may include at least one of the following:
(1) a UE identifier list with associations, where the UE identifier list includes an identifier of the first UE and an identifier of the second UE;
(2) first service identification information, where the first service identification information is used for indicating a service capable of executing multi-UE cooperative transmission, for example, the first service identification information may include DRB ID, Service ID, QoS flow ID, service feature information, or the like; and
(3) attributes of each UE indicated in the UE identifier list with associations.

In a possible implementation, before the core network device transmits the association information to the RAN node, the method further includes: the core network device obtains the association information signed by the first UE or the association information preset by the first UE.

For example, the signed or preset association information may include one of the following:
(1) a group of UE lists with binding relationships, where the UE in the list may perform cooperative transmission with each other, and each UE may be determined as P-UE or S-UE according to needs;
(2) a group of UE lists with binding relationships, where the attribute P-UE or S-UE of each UE is preset in advance; and
(3) a group of UE lists with binding relationships, where the attribute that can be supported by each UE, such as P-UE only, S-UE only or both P-UE and S-UE, is set.

The above binding relationship may be based on the granularity of UE, that is, any service between these UE may perform multi-UE architecture establishment and transmission; and the above binding relationship may also be further based on the granularity of a specific service, that is, on the basis of the UE list, these UE is limited to only perform multi-UE architecture establishment and transmission for what kind of services, where service limitations may include a service identifier, a specific QoS parameter of a service, a range of the specific QoS parameter of the service, and the like.

According to the technical solution provided in this embodiment of this application, the core network device can trigger the RAN node to perform bearer configuration for multi-UE cooperative transmission, so that multi-UE cooperative transmission can be performed between the first UE and the second UE to ensure the service experience and system efficiency of the UE.

FIG. 5 is a flowchart of a method for configuring multi-UE cooperative transmission provided in an embodiment of this application. The method 500 may be executed by first UE. In other words, the method may be executed by software or hardware installed on first UE. As shown in FIG. 5, the method may include the following step:

S510: First UE transmits a first request to an RAN node, where the first request is used for requesting the RAN node to configure a bearer for multi-UE cooperative transmission for the first UE, and the first request carries an identifier of second UE.

The method 500 provided in this embodiment of this application is the execution process of the first UE corresponding to the method 200, has implementations corresponding to possible implementations related to the first UE involved in the method 200, and may specifically refer to the description of the method 200. The following only describes the possible implementations of the steps executed by the first UE.

In a possible implementation, before the first UE transmits the first request to the RAN node, the method may further include:
step 1: the first UE transmits a third request through an interface between UE, where the third request is used for requesting aggregation transmission for the first UE; and
step 2: the first UE receives a confirmation message fed back by the second UE, where the confirmation message carries an identifier of the second UE.

Through this possible implementation, the first UE can interact with the second UE to obtain the identifier of the second UE.

In a possible implementation, the first request transmitted by the first UE also carries second service identification information, and the second service identification information is used for indicating service information of the first UE expecting multi-UE cooperative transmission.

Optionally, the second service identification information includes, but is not limited to, at least one of the following:
(1) a first DRB identifier;
(2) a service identifier;
(3) a QoS flow identifier; and
(4) service feature information.

In a possible implementation, after the first UE transmits the first request to the RAN node, the method may further include:
step 1: the first UE receives a reconfiguration message transmitted by the RAN node, where the reconfiguration message carries first configuration information, and the first configuration information is used for configuring a bearer for multi-UE cooperative transmission for the first UE; and
step 2: the first UE applies the first configuration information for reconfiguration.

For example, after receiving the first request, the RAN node can reconfigure the second UE according to the first request and then transmit the above reconfiguration message to the first UE, so as to configure a bearer for a multi-UE transmission architecture for the first UE.

Optionally, the first configuration information includes: an identifier of the second UE, and configuration information of a bearer architecture.

Optionally, the first configuration information further includes: a third DRB identifier for indicating a service bearer for multi-UE cooperative transmission configured for the first UE.

In a possible implementation, after the first UE receives the reconfiguration message transmitted by the RAN node, the method further includes:
step 1: a second reconfiguration command transmitted by the RAN node is received, where the second reconfiguration command carries an identifier of the second UE, a reconfigured first bearer identifier and the reconfigured content information, and a bearer corresponding to the first bearer identifier is the bearer for multi-UE cooperative transmission; and
step 2: the second reconfiguration command is executed.

For example, the RAN node may transmit the second reconfiguration command when the current network state cannot support one or more multi-UE cooperative transmissions, so as to modify the bearer for multi-UE cooperative transmission;
or, the first UE may request the RAN node to modify multi-UE cooperative transmission. Therefore, in a possible implementation, before receiving the second reconfiguration command transmitted by the RAN node, the method may further include: a modification request is transmitted to the RAN node, where the modification request is used for requesting modification of the bearer corresponding to the first bearer identifier.

In another possible implementation, after the first UE receives the reconfiguration message transmitted by the RAN node, the method further includes:
step 1: a second release command transmitted by the RAN node is received, where the second release command carries an identifier of the second UE, a released second bearer identifier and released content information, and a bearer corresponding to the second bearer identifier is the bearer for multi-UE cooperative transmission; and
step 2: the second release command is executed to release the bearer corresponding to the second bearer identifier.

For example, after completing the service of the first UE needing cooperative transmission, the RAN node may transmit the second release command;
or, the RAN node may also transmit the second release command based on the request of the first UE. Therefore, in an optional implementation, before receiving the second release command transmitted by the RAN node, the method may further include: a release request is transmitted to the RAN node, where the release request is used for requesting release of the bearer corresponding to the second bearer identifier.

According to the technical solution provided in this embodiment of this application, when needed, the first UE can request the RAN node to perform bearer configuration for multi-UE cooperative transmission, so that multi-UE cooperative transmission can be performed between the first UE and the second UE to ensure the service experience and system efficiency of the UE.

FIG. 6 is a flowchart of a method for responding to multi-UE cooperative transmission provided in an embodiment of this application. The method 600 may be executed by second UE. In other words, the method may be executed by software or hardware installed on second UE. As shown in FIG. 6, the method may include the following steps:
S610: Second UE receives second configuration information transmitted by an RAN node, where the second configuration information is used for indicating bearer configuration of the second UE for multi-UE cooperative transmission for first UE.
S612: The second UE applies the second configuration information to transmit a configuration completion message to the RAN node in the case of agreeing multi-UE cooperative transmission for the first UE.

The method 600 provided in this embodiment of this application is the execution process of the second UE corresponding to the method 200, has implementations corresponding to possible implementations related to the second UE involved in the method 200, and may specifically refer to the description of the method 200. The following only describes the possible implementations of the steps executed by the second UE.

In a possible implementation, the second configuration information includes: an identifier of the first UE, and configuration information of a split bearer.

In a possible implementation, the second configuration information further includes: a second DRB identifier for indicating a service bearer of the second UE for multi-UE cooperative transmission for the first UE.

In a possible implementation, before the second UE receives the second configuration information transmitted by the RAN node, the method further includes:
step 1: the second UE receives a third request transmitted by the first UE, where the third request is used for requesting aggregation transmission for the first UE; and
step 2: the second UE feeds back a confirmation message to the first UE, where the confirmation message carries an identifier of the second UE.

In a possible implementation, after transmitting the configuration completion message to the RAN node, the method further includes:
step 1: a first reconfiguration command transmitted by the RAN node is received, where the first reconfiguration command carries an identifier of the first UE, a reconfigured first bearer identifier and the reconfigured content information, and a bearer corresponding to the first bearer identifier is the bearer for multi-UE cooperative transmission; and
step 2: the first reconfiguration command is executed.

For example, the RAN node may transmit the first reconfiguration command when the service transmission or network environment changes, so as to modify the bearer for multi-UE cooperative transmission;
or, the RAN node may also modify the bearer for multi-UE cooperative transmission based on the request of the second UE. For example, based on the increase or decrease in the service transmission of the second UE, the cooperative transmission ability of the first UE is increased or reduced, the bearer for multi-UE cooperative transmission needs to be modified, and thus, a request may be transmitted to the RAN node. Therefore, in a possible implementation, before receiving the first reconfiguration command transmitted by the RAN node, the method further includes: a modification request is transmitted to the RAN node, where the modification request is used for requesting modification of the bearer corresponding to the first bearer identifier.

In a possible implementation, after transmitting the configuration completion message to the RAN node, the method further includes:
step 1: a first release command transmitted by the RAN node is received, where the first release command carries an identifier of the first UE, a released second bearer identifier and released content information, and a bearer corresponding to the second bearer identifier is the bearer for multi-UE cooperative transmission; and
step 2: the first release command is executed to release the bearer corresponding to the second bearer identifier.

For example, after completing the service of the first UE requesting cooperative transmission, the RAN node may transmit the first release command;
or, the RAN node may also modify the bearer for multi-UE cooperative transmission based on the request of the second UE. For example, based on the increase in the service transmission of the second UE, the cooperative transmission may not be performed for the first UE, the bearer for multi-UE cooperative transmission needs to be released, and thus, a request may be transmitted to the RAN node. Therefore, in a possible implementation, before receiving the first release command transmitted by the RAN node, the method further includes: a release request is transmitted to the RAN node, where the release request is used for requesting release of the bearer corresponding to the second bearer identifier.

According to the technical solution provided in this embodiment of this application, the second UE can respond to the RAN node to perform bearer configuration for multi-UE cooperative transmission to establish a bearer for multi-UE cooperative transmission, so that multi-UE cooperative transmission can be performed between the first UE and the second UE to ensure the service experience and system efficiency of the UE.

The technical solution provided in this embodiment of this application is described below by taking the first UE (that is, primary UE, P-UE) as an example.

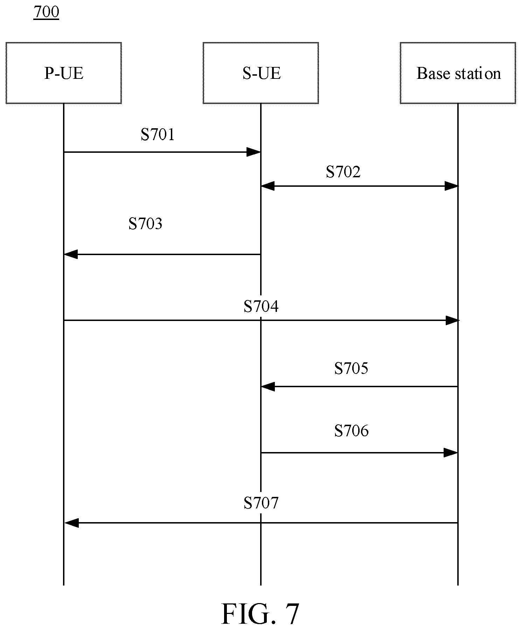

FIG. 7 is a schematic flowchart of a method for establishing a bearer for multi-UE cooperative transmission provided in an embodiment of this application. As shown in FIG. 7, the method mainly includes the following steps:
S701: The P-UE, that is, UE with services needing to be transmitted, transmits requests to other S-UE around the P-UE through interfaces between the UE, for example, transmitting an aggregation (Aggregation) transmission request (request), a backup transmission request, a switching transmission request, or the like. Whether the S-UE performs the aggregation transmission is requested through the request.

In this request, at least one or a combination of the following information can be carried:
(1) a user identifier of the P-UE, where this user identifier is used for recognizing the P-UE, on the one hand, it is to confirm willingness and credit, on the other hand, it is important for a gNB to facilitate the identification and recognition of subsequent processes of two UE, and the identifier may be a global unique identifier, a unique identifier in a PLMN, an identifier under a service base station/cell and the like, such as an S-TMSI and a C-RNTI; and
(2) an own service base station of the P-UE, where the function of carrying the service base station is to implement multi-UE architectures under one base station as much as possible to avoid the introduction of interfaces between base stations, which will result in much higher complexity and time delay.

S702: The S-UE initiates an RRC connection establishment process to the corresponding service base station, and performs the process of activating an own security mode command (Security Mode Command, SMC).

If the S-UE is currently in an RRC Connected state, this step can be omitted. Through this step, a UE identifier of the S-UE that can be recognized by the gNB can be obtained, and the identifier may be a global unique identifier, a unique identifier in a PLMN, an identifier under a service base station/cell and the like, such as an S-TMSI and a C-RNTI.

S703: If the S-UE agrees the aggregation/backup/switching transmission for the P-UE, the S-UE can reply to the P-UE for confirmation and inform the UE identifier thereof.

S704: After obtaining the agreement or UE identifier of the S-UE, the P-UE reports a request to its service base station for multi-UE architecture configuration and carries the UE identifier of the S-UE, indicating that the P-UE performs the aggregation/backup/switching transmission with the designated S-UE.

S704 can be initiated directly in the case of omitting S701 to S703 as long as there is interaction between the P-UE and the S-UE and there is a user identifier of the S-UE.

S705: After receiving the request of the P-UE, the base station generates the corresponding configuration and transmits the corresponding configuration to the designated S-UE.

Through S705, the agreement of the S-UE can be sought to determine whether the S-UE is intended to perform the aggregation/backup/switching transmission for the P-UE. The configuration information transmitted by the base station to the S-UE carries an identifier of the P-UE, indicating that the configured P-UE of the multi-UE architecture facilitates the S-UE to perform the current intention judgment and subsequent cooperative operations.

S706: After agreement, the S-UE executes the configuration and returns confirmation to the gNB.

S707: The gNB performs a multi-architecture confirmation operation on the P-UE. Optionally, the message transmitted by the gNB to the P-UE may further carry the corresponding configuration of the multi-UE architecture.

In the above process, a schematic example of the request and related command process for the P-UE and the S-UE to establish a multi-UE architecture is provided. Because no service information is indicated in the above process and only permission and configuration are performed for two UE, it can be understood that any aggregation/backup/switching bearer can be established between the two UE at this time. For example, all bearers of the P-UE may be configured for multi-UE architecture transmission; or, the needed bearer of the P-UE may be configured for multi-UE architecture transmission based on the determination of a base station algorithm, the QoS of a service, and the like; or, the permitted bearer of the P-UE may be configured for multi-UE architecture transmission by the base station according to the binding information transmitted by the core network.

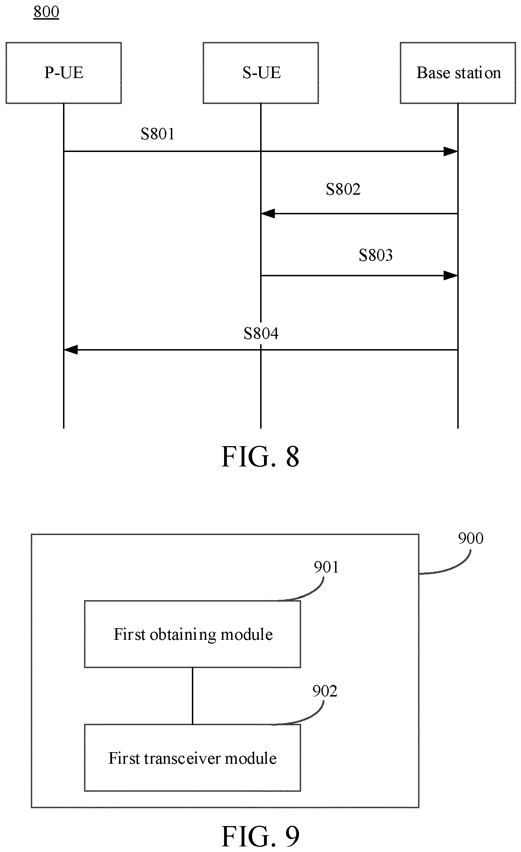

FIG. 8 is another schematic flowchart of a method for establishing a bearer for multi-UE cooperative transmission provided in an embodiment of this application. As shown in FIG. 8, the method mainly includes the following steps:

S801: The P-UE transmits a multi-UE architecture request to the network, where the request may carry a user identifier of the S-UE and carry the service information expecting multi-UE architecture transmission.

The service information may include at least one of the following:
(1) a DRB ID which is an identifier of the DRB that has been established by the P-UE currently;
(2) a Service ID or QoS flow ID which is a service identifier or QoS flow identifier that is transmitted currently or needs to be transmitted subsequently by the P-UE; and
(3) a service feature, for example, a QoS parameter value is equal to a certain value or within a certain interval.

Before S801, S701 to S703 in the method 700 may also be executed. The difference between the method 800 and the method 700 is that the method 800 is a process for establishing multiple architectures based on specific services.

S802: The base station transmits reconfiguration information to the S-UE for configuring a multi-UE architecture related bearer.

The reconfiguration information transmitted by the base station to the S-UE may carry the following information:
(1) a user identifier of the P-UE, which facilitates the S-UE to recognize the P-UE to determine whether the S-UE is intended to establish an aggregation/backup/switching bearer for the P-UE, and perform mutual identification during the subsequent cooperative work if intended;
(2) a DRB ID which facilitates the base station to clearly indicate which bearer is subjected to aggregation/backup/switching configuration; and
(3) information of RLC, MAC, a physical layer (Physical Layer, PHY), an LCID, and the like, where these information can be used for configuration of the S-UE side for the aggregation/backup/switching bearer.

S803: If the S-UE agrees, preparations are made according to the configuration, and configuration completion is replied to the base station.

S804: The base station returns bearer reconfiguration confirmation to the P-UE to determine that the requested or designated bearer DRB ID has been configured with the corresponding aggregation/backup/switching multi-UE architecture.

Subsequently, the P-UE can deliver the data of the own DRB ID to the S-UE, and the S-UE transmits the data to the gNB.

The aggregation/backup/switching multi-UE architecture mentioned in the above method 700 mainly refers to one or more of the PDCP anchor architecture shown in FIG. 3 a, the RLC anchor architecture shown in FIG. 3b, and the MAC anchor architecture shown in FIG. 3c.

Certainly, in addition to the architecture illustrated above, it is not ruled out that some common functions of a certain layer, such as PDCP or MAC, are located in the P-UE, while the split function is located in the S-UE. This architecture can also work.

The protocol may select one or more architectures. If only one architecture is selected, the network side can configure a protocol entity related to the architecture by default. If two or more architectures are selected, the network side can select and configure different architectures as needed.

Through the above method provided in this embodiment of this application, the RAN side can configure multiple UE, so that multiple-UE joint transmission can be achieved under the control of the network side to ensure the service experience and system efficiency of the UE.

It should be noted that an executive body of the bearer configuration method provided in this embodiment of this application may be a bearer configuration apparatus, or a control module for executing the bearer configuration method in the bearer configuration apparatus. In this embodiment of this application, the bearer configuration apparatus executing the bearer configuration method is taken as an example to describe the bearer configuration apparatus provided in this embodiment of this application.

FIG. 9 is a schematic structural diagram of a bearer configuration apparatus provided in an embodiment of this application. As shown in FIG. 9, the apparatus 900 mainly includes: a first obtaining module 901 and a first transceiver module 902.

In this embodiment of this application, the first obtaining module 901 is configured to obtain first configuration information of first UE, where the first configuration information is used for configuring a bearer for multi-UE cooperative transmission; and the first transceiver module 902 is configured to transmit the first configuration information to the first UE.

In a possible implementation, the first transceiver module 902 is further configured to receive association information transmitted by a core network before transmitting the first configuration information to the first UE, where the association information is used for indicating an association between the first UE and second UE.

In a possible implementation, the association information includes at least one of the following:
a UE identifier list with associations, where the UE identifier list includes an identifier of the first UE and an identifier of the second UE;
first service identification information, where the first service identification information is used for indicating a service capable of executing multi-UE cooperative transmission; and
attributes of each UE in the UE identifier list with associations.

In a possible implementation, the first obtaining module 901 is further configured to determine that a first condition is met.

In a possible implementation, the first condition includes at least one of the following:
the association information between the first UE and the second UE is obtained from a core network;
as a service node of the first UE, it is determined that the first UE and the second UE with an association are in a connected state;
as a service node of the first UE, it is determined that at least some of service transmissions of the first UE cannot meet QoS requirements or service experience requirements; the RAN node pages the second UE to determine that the second UE enters a connected state; and
at least some of current services of the first UE have the feature of supporting multi-UE transmission.

In a possible implementation, the first obtaining module 901 is further configured to determine that a transmission distance and/or a link situation between the first UE and the second UE meets multi-UE transmission requirements before transmitting the first configuration information to the first UE.

In a possible implementation, the first transceiver module 902 is further configured to transmit second configuration information to the second UE before transmitting the first configuration information to the first UE, where the second configuration information is used for indicating bearer configuration of the second UE for multi-UE cooperative transmission for the first UE; and receive a configuration completion message transmitted by the second UE.

In a possible implementation, the first transceiver module 902 is further configured to receive a first request transmitted by the first UE before transmitting the first configuration information to the first UE, where the first request is used for requesting the first configuration information, and the first request carries an identifier of the second UE.

In a possible implementation, the first request also carries second service identification information for indicating service information of the first UE expecting multi-UE cooperative transmission.

In a possible implementation, the second service identification information includes at least one of the following:
a first data radio bearer (DRB) identifier;
a service identifier;
a QoS flow identifier; and
service feature information.

In a possible implementation, the first transceiver module 902 is further configured to transmit second configuration information to the second UE after receiving the first request transmitted by the first UE, where the second configuration information is used for indicating bearer configuration of the second UE for multi-UE cooperative transmission for the first UE.

In a possible implementation, the second configuration information includes: an identifier of the first UE, and configuration information of a split bearer.

In a possible implementation, the second configuration information further includes: a second DRB identifier for indicating a service bearer of the second UE for multi-UE cooperative transmission for the first UE.

In a possible implementation, the first transceiver module 902 is further configured to receive a configuration completion message transmitted by the second UE after transmitting the second configuration information to the second UE; and transmit a reconfiguration message to the first UE, where the reconfiguration message carries the first configuration information.

In a possible implementation, the first configuration information includes:
an identifier of the second UE, and configuration information of a bearer architecture.

In a possible implementation, the first configuration information further includes: a third DRB identifier for indicating a service bearer for multi-UE cooperative transmission configured for the first UE.

In a possible implementation, the first transceiver module 902 is further configured to transmit a first reconfiguration command to the second UE after transmitting the first configuration information to the first UE, where the first reconfiguration command carries an identifier of the first UE, a reconfigured first bearer identifier and reconfigured content information, and a bearer corresponding to the first bearer identifier is the bearer for multi-UE cooperative transmission; and transmit a second reconfiguration command to the first UE, where the second reconfiguration command carries an identifier of the second UE, the first bearer identifier and the reconfigured content information.

In a possible implementation, the first transceiver module 902 is further configured to receive a modification request transmitted by the first UE or the second UE before transmitting the first reconfiguration command to the second UE, where the modification request is used for requesting modification of the bearer corresponding to the first bearer identifier.

In a possible implementation, the first transceiver module 902 is further configured to transmit a first release command to the second UE after transmitting the first configuration information to the first UE, where the first release command carries an identifier of the first UE, a released second bearer identifier and released content information, and a bearer corresponding to the second bearer identifier is the bearer for multi-UE cooperative transmission; and transmit a second release command to the first UE, where the second release command carries an identifier of the second UE, the second bearer identifier and released content information.

In a possible implementation, the first transceiver module 902 is further configured to receive a release request transmitted by the first UE or the second UE before transmitting the first release command to the second UE, where the release request is used for requesting release of the bearer corresponding to the second bearer identifier.

The bearer configuration apparatus in this embodiment of this application may be an apparatus, or a component, an integrated circuit or a chip in a network side device. The apparatus may be a base station or a CU, which is not specifically limited in this embodiment of this application.

The bearer configuration apparatus in this embodiment of this application may be an apparatus with an operating system. The operating system may be an Android (Android) operating system, an ios operating system, or another possible operating system, which is not specifically limited in this embodiment of this application.

The bearer configuration apparatus provided in this embodiment of this application can implement the processes implemented by the RAN node in the method embodiments in FIG. 2 to FIG. 8, and achieve the same technical effects. To avoid repetition, details are not described here.

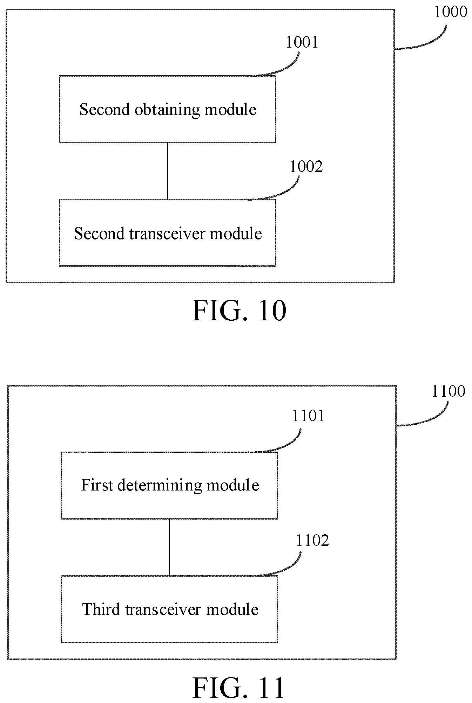

FIG. 10 is a schematic structural diagram of an apparatus for configuring multi-UE cooperative transmission provided in an embodiment of this application. As shown in FIG. 10, the apparatus mainly includes: a second obtaining module 1001 and a second transceiver module 1002.

In this embodiment of this application, the second obtaining module 1001 is configured to obtain association information, where the association information is used for indicating that first UE and second UE have an association, and the first UE and the second UE have an ability to establish multi-UE cooperative transmission; and the second transceiver module 1002 is configured to transmit the association to an RAN node.

In a possible implementation, the second transceiver module 1002 is further configured to execute at least one of the following before transmitting the association information to the RAN node:
learning that both the first UE and the second UE are in a connected state;
discovering that the first UE enters a connected state, where the first UE and the second UE have an association based on any service;
discovering that the first UE enters a connected state and a first service is initiated, where the first UE and the second UE have an association based on a target service, and the target service includes the first service; and
receiving a second request transmitted by the RAN node, where the second request is used for requesting all UE associated with the first UE, or the second request is used for requesting UE that has an association with the first UE based on a second service.

In a possible implementation, the association information includes at least one of the following:
a UE identifier list with associations, where the UE identifier list includes an identifier of the first UE and an identifier of the second UE;
first service identification information, where the first service identification information is used for indicating a service capable of executing multi-UE cooperative transmission; and
attributes of each UE indicated in the UE identifier list with associations.

In a possible implementation, the second obtaining module 1001 is further configured to obtain the association information signed by the first UE or the association information preset by the first UE before transmitting the association information to the RAN node.

The apparatus for configuring multi-UE cooperative transmission in this embodiment of this application may be an apparatus, or a component, an integrated circuit or a chip in a network side device. The apparatus may be a base station or a CU, which is not specifically limited in this embodiment of this application.

The apparatus for configuring multi-UE cooperative transmission in this embodiment of this application may be an apparatus with an operating system. The operating system may be an Android (Android) operating system, an ios operating system, or another possible operating system, which is not specifically limited in this embodiment of this application.

The apparatus for configuring multi-UE cooperative transmission provided in this embodiment of this application can implement the processes implemented by the core network device or core network in the method embodiments in FIG. 2 to FIG. 8, and achieve the same technical effects. To avoid repetition, details are not described here.

FIG. 11 is a schematic structural diagram of an apparatus for requesting multi-UE cooperative transmission provided in an embodiment of this application. As shown in FIG. 11, the apparatus 1100 mainly includes: a first determining module 1101 and a third transceiver module 1102.

In this embodiment of this application, the first determining module 1101 is configured to determine that first UE needs to execute multi-UE cooperative transmission; and the third transceiver module 1102 is configured to transmit a first request to an RAN node, where the first request is used for requesting the RAN node to configure a bearer for multi-UE cooperative transmission for the first UE, and the first request carries an identifier of second UE.

In a possible implementation, the third transceiver module 1102 is further configured to transmit a third request through an interface between UE before transmitting the first request to the RAN node, where the third request is used for requesting aggregation transmission for the first UE; and receive a confirmation message fed back by the second UE, where the confirmation message carries an identifier of the second UE.

In a possible implementation, the third transceiver module 1102 is further configured to receive a reconfiguration message transmitted by the RAN node after transmitting the first request to the RAN node, where the reconfiguration message carries first configuration information, and the first configuration information is used for configuring a bearer for multi-UE cooperative transmission for the first UE; and apply the first configuration information for reconfiguration.

In a possible implementation, the first configuration information includes: an identifier of the second UE, and configuration information of a bearer architecture.

In a possible implementation, the first configuration information further includes: a third DRB identifier for indicating a service bearer for multi-UE cooperative transmission configured for the first UE.

In a possible implementation, the third transceiver module 1102 is further configured to receive a second reconfiguration command transmitted by the RAN node after receiving the reconfiguration message transmitted by the RAN node, where the second reconfiguration command carries an identifier of the second UE, a reconfigured first bearer identifier and the reconfigured content information, and a bearer corresponding to the first bearer identifier is the bearer for multi-UE cooperative transmission; and execute the second reconfiguration command.

In a possible implementation, the third transceiver module 1102 is further configured to transmit a modification request to the RAN node before receiving the second reconfiguration command transmitted by the RAN node, where the modification request is used for requesting modification of the bearer corresponding to the first bearer identifier.

In a possible implementation, the third transceiver module 1102 is further configured to receive a second release command transmitted by the RAN node after receiving the reconfiguration message transmitted by the RAN node, where the second release command carries an identifier of the second UE, a released second bearer identifier and released content information, and a bearer corresponding to the second bearer identifier is the bearer for multi-UE cooperative transmission; and execute the second release command to release the bearer corresponding to the second bearer identifier.

In a possible implementation, the third transceiver module 1102 is further configured to transmit a release request to the RAN node before receiving the second release command transmitted by the RAN node, where the release request is used for requesting release of the bearer corresponding to the second bearer identifier.

In a possible implementation, the first request also carries second service identification information, and the second service identification information is used for indicating service information of the first UE expecting multi-UE cooperative transmission.

In a possible implementation, the second service identification information includes at least one of the following:
a first DRB identifier;
a service identifier;
a QoS flow identifier; and
service feature information.

The apparatus for requesting multi-UE cooperative transmission in this embodiment of this application may be an apparatus, or a component, an integrated circuit or a chip in a terminal device. The apparatus may be a base station or a CU, which is not specifically limited in this embodiment of this application.

The apparatus for requesting multi-UE cooperative transmission in this embodiment of this application may be an apparatus with an operating system. The operating system may be an Android (Android) operating system, an ios operating system, or another possible operating system, which is not specifically limited in this embodiment of this application.

The apparatus for requesting multi-UE cooperative transmission provided in this embodiment of this application can implement the processes implemented by the first UE in the method embodiments in FIG. 2 to FIG. 8, and achieve the same technical effects. To avoid repetition, details are not described here.

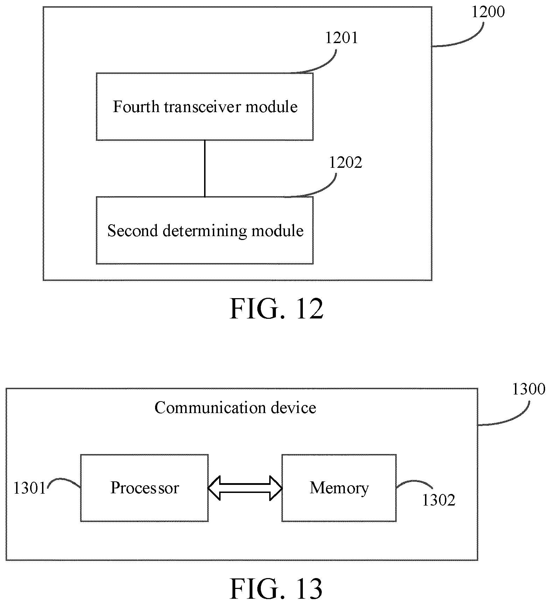

FIG. 12 is a schematic structural diagram of an apparatus for responding to multi-UE cooperative transmission provided in an embodiment of this application. As shown in FIG. 12, the apparatus 1200 mainly includes: a fourth transceiver module 1201 and a second determining module 1202.

In this embodiment of this application, the fourth transceiver module 1201 is configured to receive second configuration information transmitted by an RAN node, where the second configuration information is used for indicating bearer configuration of the second UE for multi-UE cooperative transmission for the first UE; the second determining module 1202 is configured to determine whether to agree multi-UE cooperative transmission for the first UE; and the fourth transceiver module 1201 is further configured to allow the second UE to apply the second configuration information to transmit a configuration completion message to the RAN node in the case of agreeing multi-UE cooperative transmission for the first UE.

In a possible implementation, the second configuration information includes: an identifier of the first UE, and configuration information of a split bearer.

In a possible implementation, the second configuration information further includes: a second DRB identifier for indicating a service bearer of the second UE for multi-UE cooperative transmission for the first UE.

In a possible implementation, the fourth transceiver module 1201 is further configured to receive a third request transmitted by the first UE before receiving the second configuration information transmitted by the RAN node, where the third request is used for requesting aggregation transmission for the first UE; and feed back a confirmation message to the first UE, where the confirmation message carries an identifier of the second UE.

In a possible implementation, the fourth transceiver module 1201 is further configured to receive a first reconfiguration command transmitted by the RAN node after transmitting the configuration completion message to the RAN node, where the first reconfiguration command carries an identifier of the first UE, a reconfigured first bearer identifier and the reconfigured content information, and a bearer corresponding to the first bearer identifier is the bearer for multi-UE cooperative transmission; and execute the first reconfiguration command.

In a possible implementation, the fourth transceiver module 1201 is further configured to transmit a modification request to the RAN node before receiving the first reconfiguration command transmitted by the RAN node, where the modification request is used for requesting modification of the bearer corresponding to the first bearer identifier.

In a possible implementation, the fourth transceiver module 1201 is further configured to receive a first release command transmitted by the RAN node after transmitting the configuration completion message to the RAN node, where the first release command carries an identifier of the first UE, a released second bearer identifier and released content information, and a bearer corresponding to the second bearer identifier is the bearer for multi-UE cooperative transmission; and execute the first release command to release the bearer corresponding to the second bearer identifier.

In a possible implementation, the fourth transceiver module 1201 is further configured to transmit a release request to the RAN node before receiving the first release command transmitted by the RAN node, where the release request is used for requesting release of the bearer corresponding to the second bearer identifier.

The apparatus for responding to multi-UE cooperative transmission in this embodiment of this application may be an apparatus, or a component, an integrated circuit or a chip in a terminal device. The apparatus may be a base station or a CU, which is not specifically limited in this embodiment of this application.

The apparatus for responding to multi-UE cooperative transmission in this embodiment of this application may be an apparatus with an operating system. The operating system may be an Android (Android) operating system, an ios operating system, or another possible operating system, which is not specifically limited in this embodiment of this application.

The apparatus for responding to multi-UE cooperative transmission provided in this embodiment of this application can implement the processes implemented by the second UE in the method embodiments in FIG. 2 to FIG. 8, and achieve the same technical effects. To avoid repetition, details are not described here.

Optionally, as shown in FIG. 13, an embodiment of this application further provides a communication device 1300, including a processor 1301, a memory 1302, and a program or an instruction stored in the memory 1302 and executable on the processor 1301. For example, when the communication device 1300 is a terminal, the program or instruction, when executed by the processor 1301, implements the processes in the above embodiment of the method 400 or the above embodiment of the method 500, and can achieve the same technical effects. When the communication device 1300 is a network side device, the program or instruction, when executed by the processor 1301, implements the processes in the above embodiment of the method 200 or the above embodiment of the method 300, and can achieve the same technical effects. To avoid repetition, details are not described here.

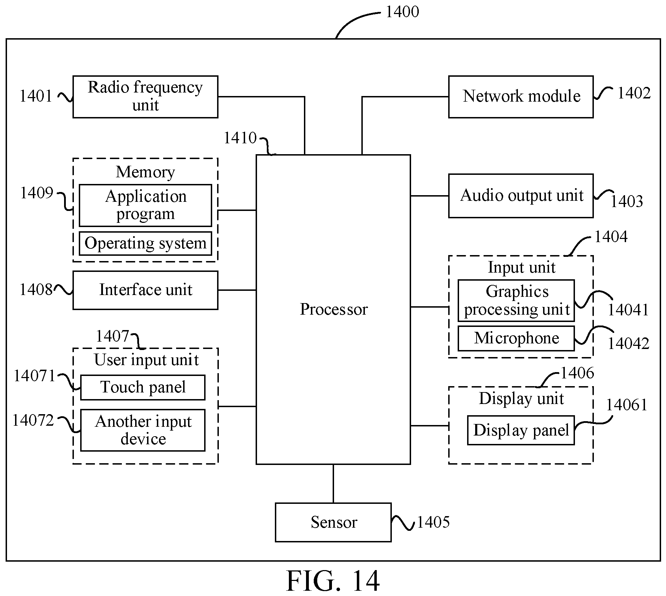

An embodiment of this application further provides a terminal, including a processor and a communication interface. The processor is configured to implement the processes in the above embodiment of the method 400 or the above embodiment of the method 500, and the communication interface is configured to communicate with an external device. This terminal embodiment corresponds to the above terminal side method embodiment, and the implementation processes and implementations of the above method embodiment can be applicable to this terminal embodiment and can achieve the same technical effects. Specifically, FIG. 14 is a schematic diagram of hardware structures of a terminal for implementing an embodiment of this application.

The terminal 1400 includes but is not limited to: a radio frequency unit 1401, a network module 1402, an audio output unit 1403, an input unit 1404, a sensor 1405, a display unit 1406, a user input unit 1407, an interface unit 1408, a memory 1409, and a processor 1410.

Those skilled in the art can understand that the terminal 1400 may further include a power supply (such as a battery) for supplying power to the components. The power supply may be logically connected to the processor 1410 by a power management system, thereby implementing functions such as charging, discharging and power consumption management by the power management system. The terminal structures shown in FIG. 14 do not constitute a limitation on the terminal, and the terminal may include more or fewer components than those shown in figures, or some components may be combined, or different component layouts may be used. Details are not described here.

It should be understood that in this embodiment of this application, the input unit 1404 may include a graphics processing unit (Graphics Processing Unit, GPU) 14041 and a microphone 14042. The GPU 14041 processes image data of a static picture or a video that is obtained by an image acquisition apparatus (such as a camera) in a video acquisition mode or an image acquisition mode. The display unit 1406 may include a display panel 14061, and the display panel 14061 may be configured in the form of a liquid crystal display (LCD), an organic light-emitting diode (OLED), or the like. The user input unit 1407 includes a touch panel 14071 and another input device 14072. The touch panel 14071 is also known as a touch screen. The touch panel 14071 may include two parts: a touch detection apparatus and a touch controller. The another input device 14072 may include, but is not limited to, a physical keyboard, a functional key (such as a volume control key or a switch key), a track ball, a mouse and a joystick, which are not described here in detail.

In this embodiment of this application, after the radio frequency unit 1401 receives downlink data from a network side device, the downlink data is transmitted to the processor 1410 for processing. In addition, uplink data is transmitted to the network side device. Generally, the radio frequency unit 1401 includes, but is not limited to, an antenna, at least one amplifier, a transceiver, a coupler, a low noise amplifier, a duplexer, and the like.

The memory 1409 may be configured to store a software program or instruction and various data. The memory 1409 may mainly include a program or instruction storage area and a data storage area, where the program or instruction storage area may store an operating system, an application program or instruction required by at least one function (for example, a sound playback function or an image playback function), and the like. In addition, the memory 1409 may include a high-speed random access memory and may further include a non-transient memory, where the non-transient memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory, such as at least one magnetic disk storage device, a flash memory device or another non-transient solid-state storage device.

The processor 1410 may include one or more processing units. Optionally, the processor 1410 may integrate an application processor and a modem processor, where the application processor mainly processes an operating system, a user interface, an application program or instruction, and the like, and the modem processor mainly processes wireless communication, such as a baseband processor. It can be understood that the above modem processor may not be integrated into the processor 1410.

The radio frequency unit 1401 is configured to transmit a first request to an RAN node, where the first request is used for requesting the RAN node to configure a bearer for multi-UE cooperative transmission for the first UE, and the first request carries an identifier of second UE.

Or, the radio frequency unit 1401 is configured to receive second configuration information transmitted by an RAN node, where the second configuration information is used for indicating bearer configuration of the second UE for multi-UE cooperative transmission for the first UE; and allow the second UE to apply the second configuration information to transmit a configuration completion message to the RAN node in the case of agreeing multi-UE cooperative transmission for the first UE.

An embodiment of this application further provides a network side device, including a processor and a communication interface. The processor is configured to implement the processes in the above embodiment of the method 200 or the above embodiment of the method 300, and the communication interface is configured to communicate with an external device. This network side device embodiment corresponds to the above network side device method embodiment, and the implementation processes and implementations of the above method embodiment can be applicable to this network side device embodiment and can achieve the same technical effects.

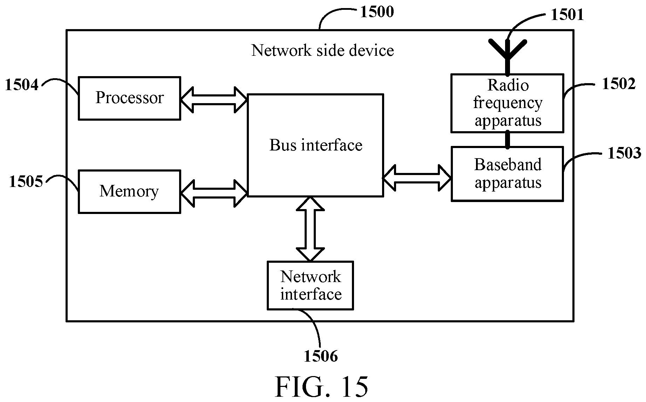

Specifically, an embodiment of this application further provides a network side device. As shown in FIG. 15, the network device 1500 includes: an antenna 1501, a radio frequency apparatus 1502, and a baseband apparatus 1503. The antenna 1501 is connected to the radio frequency apparatus 1502. In an uplink direction, the radio frequency apparatus 1502 receives information through the antenna 1501 and transmits the received information to the baseband apparatus 1503 for processing. In a downlink direction, the baseband apparatus 1503 processes the information to be transmitted and transmits the processed information to the radio frequency apparatus 1502, and the radio frequency apparatus 1502 processes the received information and then transmits the processed information out through the antenna 1501.

A frequency band processing apparatus may be located in the baseband apparatus 1503. The method executed by the network side device in the above embodiment may be implemented in the baseband apparatus 1503. The baseband apparatus 1503 includes a processor 1504 and a memory 1505.

The baseband apparatus 1503, for example, may include at least one baseband board, and a plurality of chips are arranged on the baseband board. As shown in FIG. 15, one of the chips, for example, may be a processor 1504 which is connected to the memory 1505 to call a program in the memory 1505 to execute the operation of the network device shown in the above method embodiment.

The baseband apparatus 1503 may further include a network interface 1506 configured to exchange information with the radio frequency apparatus 1502. The interface, for example, may be a common public radio interface (common public radio interface, CPRI).

Specifically, the network side device in this embodiment of this application further includes: an instruction or a program stored in the memory 1505 and executable on the processor 1504. The processor 1504 calls the instruction or program in the memory 1505 to execute the method executed by each module shown in FIG. 9 or FIG. 10 and achieve the same technical effects. To avoid repetition, details are not described here.

An embodiment of this application further provides a readable storage medium. The readable storage medium may be volatile or non-volatile. The readable storage medium stores a program or an instruction. The program or instruction, when executed by a processor, implements the processes in the above embodiment of the method 200, or implements the processes in the above embodiment of the method 300, or implements the processes in the above embodiment of the method 400, or implements the processes in the above embodiment of the method 500, and can achieve the same technical effects. To avoid repetition, details are not described here.

The processor is a processor in the terminal described in the above embodiment. The readable storage medium includes a computer-readable storage medium, such as a read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled with the processor. The processor is configured to execute a program or an instruction to implement the processes in the above embodiment of the method 200, or implement the processes in the above embodiment of the method 300, or implement the processes in the above embodiment of the method 400, or implement the processes in the above embodiment of the method 500, and can achieve the same technical effects. To avoid repetition, details are not described here.

It should be understood that the chip mentioned in this embodiment of this application may also be referred to as a system level chip, a system chip, a chip system, an on-chip system chip, or the like.

An embodiment of this application further provides a computer program/program product. The computer program/program product is stored in a non-transient storage medium. The computer program/program product is executed by at least one processor to implement the processes in the above embodiment of the method 200, or implement the processes in the above embodiment of the method 300, or implement the processes in the above embodiment of the method 400, or implement the processes in the above embodiment of the method 500, and can achieve the same technical effects. To avoid repetition, details are not described here.

It should be noted that in this specification, the terms "include", "contain" or any other variants thereof are intended to cover non-exclusive inclusions, so that a process, method, article, or apparatus including a series of elements includes not only those elements, but also other elements that are not explicitly listed, or further includes elements inherent to such process, method, article, or apparatus. Without more limitations, the element defined by the sentence "including one ..." does not exclude that there are still other same elements in the process, method, article or apparatus including this element. In addition, it should be noted that the scope of the methods and apparatuses in the implementations of this application is not limited to execute functions in the order shown or discussed, but may also include executing functions in a substantially simultaneous manner or in an opposite order according to the functions involved. For example, the described method may be executed in an order different from the described order, and various steps may be added, omitted or combined. In addition, features described with reference to some examples may be combined in other examples.

Through the descriptions in the above implementations, those skilled in the art can clearly understand that the methods in the above embodiments may be implemented by means of software and a necessary general hardware platform, and certainly, may also be implemented by hardware. However, in many cases, the former is the better implementation. Based on such an understanding, the technical solutions in this application essentially, or the part contributing to the prior art, may be presented in the form of a computer software product. The computer software product is stored in a storage medium (for example, an ROM/RAM, a magnetic disk, or an optical disc) including several instructions to enable a terminal (which may be a mobile phone, a computer, a server, an air conditioner, a network device, or the like) to execute the methods described in the embodiments of this application.

The embodiments of this application are described above with reference to the accompanying drawings. However, this application is not limited to the specific implementations described above. The above specific implementations are merely exemplary and not limitative. Enlightened by this application, those of ordinary skill in the art can make many forms without departing from the idea of this application and the scope of protection of the claims. All of the forms fall within the protection of this application.

## Claims

1. A bearer configuration method, comprising:
transmitting, by a radio access network (RAN) node, first configuration information to first user equipment (UE), wherein the first configuration information is used for configuring a bearer for multi-UE cooperative transmission.

2. The method according to claim 1, wherein before the transmitting, by the RAN node, the first configuration information to the first UE, the method further comprises:
receiving, by the RAN node, association information transmitted by a core network, wherein the association information is used for indicating an association between the first UE and second UE.

3. The method according to claim 2, wherein the association information comprises at least one of the following:
a UE identifier list with associations, wherein the UE identifier list comprises an identifier of the first UE and an identifier of the second UE;
first service identification information, wherein the first service identification information is used for indicating a service capable of executing multi-UE cooperative transmission; and
attributes of each UE in the UE identifier list with associations.

4. The method according to claim 1, wherein before the transmitting, by the RAN node, the first configuration information to the first UE, the method further comprises:
determining, by the RAN node, that a first condition is met.

5. The method according to claim 4, wherein the first condition comprises at least one of the following:
the RAN node obtains association information between the first UE and the second UE from a core network;
the RAN node, as a service node of the first UE, determines that the first UE and the second UE with an association are in a connected state;
the RAN node, as a service node of the first UE, determines that at least some of service transmissions of the first UE cannot meet quality of service (QoS) requirements or service experience requirements; the RAN node pages the second UE to determine that the second UE enters a connected state; and
at least some of current services of the first UE have a feature of supporting multi-UE transmission.

6. The method according to claim 4, wherein after the determining, by the RAN node, that a predetermined condition is met and before the transmitting the first configuration information to the first UE, the method further comprises:
determining, by the RAN node, that a transmission distance and/or a link situation between the first UE and the second UE meets multi-UE transmission requirements.

7. The method according to any one of claims 1 to 6, wherein before the transmitting, by the RAN node, the first configuration information to the first UE, the method further comprises:
transmitting, by the RAN node, second configuration information to the second UE, wherein the second configuration information is used for indicating bearer configuration of the second UE for multi-UE cooperative transmission for the first UE; and
receiving, by the RAN node, a configuration completion message transmitted by the second UE.

8. The method according to claim 1, wherein before the transmitting, by the RAN node, the first configuration information to the first UE, the method further comprises:
receiving a first request transmitted by the first UE, wherein the first request is used for requesting the first configuration information, and the first request carries an identifier of the second UE.

9. The method according to claim 8, wherein the first request also carries second service identification information for indicating service information of the first UE expecting multi-UE cooperative transmission.

10. The method according to claim 9, wherein the second service identification information comprises at least one of the following:
a first data radio bearer (DRB) identifier;
a service identifier;
a QoS flow identifier; and
service feature information.

11. The method according to claim 8, wherein after the receiving the first request transmitted by the first UE, the method further comprises:
transmitting, by the RAN node, second configuration information to the second UE, wherein the second configuration information is used for indicating bearer configuration of the second UE for multi-UE cooperative transmission for the first UE.

12. The method according to claim 7 or 11, wherein the second configuration information comprises: an identifier of the first UE, and configuration information of a split bearer.

13. The method according to claim 12, wherein the second configuration information further comprises: a second DRB identifier for indicating a service bearer of the second UE for multi-UE cooperative transmission for the first UE.

14. The method according to claim 11, wherein after the transmitting, by the RAN node, the second configuration information to the second UE, the method further comprises:
receiving, by the RAN node, a configuration completion message transmitted by the second UE; and
transmitting, by the RAN node, a reconfiguration message to the first UE, wherein the reconfiguration message carries the first configuration information.

15. The method according to any one of claims 2 to 14, wherein the first configuration information comprises:
an identifier of the second UE, and configuration information of a bearer architecture.

16. The method according to claim 15, wherein the first configuration information further comprises: a third DRB identifier for indicating a service bearer for multi-UE cooperative transmission configured for the first UE.

17. The method according to any one of claims 2 to 14, wherein after the transmitting, by the RAN node, the first configuration information to the first UE, the method further comprises:
transmitting, by the RAN node, a first reconfiguration command to the second UE, wherein the first reconfiguration command carries an identifier of the first UE, a reconfigured first bearer identifier and reconfigured content information, and a bearer corresponding to a first bearer identifier is the bearer for multi-UE cooperative transmission; and
transmitting, by the RAN node, a second reconfiguration command to the first UE, wherein the second reconfiguration command carries an identifier of the second UE, the first bearer identifier and the reconfigured content information.

18. The method according to claim 17, wherein before the transmitting, by the RAN node, the first reconfiguration command to the second UE, the method further comprises:
receiving a modification request transmitted by the first UE or the second UE, wherein the modification request is used for requesting modification of the bearer corresponding to the first bearer identifier.

19. The method according to any one of claims 2 to 14, wherein after the transmitting, by the RAN node, the first configuration information to the first UE, the method further comprises:
transmitting, by the RAN node, a first release command to the second UE, wherein the first release command carries an identifier of the first UE, a released second bearer identifier and released content information, and a bearer corresponding to a second bearer identifier is the bearer for multi-UE cooperative transmission; and
transmitting, by the RAN node, a second release command to the first UE, wherein the second release command carries an identifier of the second UE, the second bearer identifier and the released content information.

20. The method according to claim 19, wherein before the transmitting, by the RAN node, the first release command to the second UE, the method further comprises:
receiving a release request transmitted by the first UE or the second UE, wherein the release request is used for requesting release of the bearer corresponding to the second bearer identifier.

21. A method for configuring multi-UE cooperative transmission, comprising:
transmitting, by a core network device, association information to an RAN node, wherein the association information is used for indicating that first UE and second UE have an association, and the first UE and the second UE have an ability to establish multi-UE cooperative transmission.

22. The method according to claim 21, wherein before the transmitting, by the core network device, the association information to the RAN node, the method further comprises at least one of the following:
learning, by the core network device, that both the first UE and the second UE are in a connected state;
discovering, by the core network device, that the first UE enters a connected state, wherein the first UE and the second UE have an association based on any service;
discovering, by the core network device, that the first UE enters a connected state and a first service is initiated, wherein the first UE and the second UE have an association based on a target service, and the target service comprises the first service; and
receiving a second request transmitted by the RAN node, wherein the second request is used for requesting all UE associated with the first UE, or the second request is used for requesting UE that has an association with the first UE based on a second service.

23. The method according to claim 21, wherein the association information comprises at least one of the following:
a UE identifier list with associations, wherein the UE identifier list comprises an identifier of the first UE and an identifier of the second UE;
first service identification information, wherein the first service identification information is used for indicating a service capable of executing multi-UE cooperative transmission; and
attributes of each UE indicated in the UE identifier list with associations.

24. The method according to any one of claims 21 to 23, wherein before the transmitting, by the core network device, the association information to the RAN node, the method further comprises:
obtaining, by the core network device, association information signed by the first UE or association information preset by the first UE.

25. A method for requesting multi-UE cooperative transmission, comprising:
transmitting, by first UE, a first request to an RAN node, wherein the first request is used for requesting the RAN node to configure a bearer for multi-UE cooperative transmission for the first UE, and the first request carries an identifier of second UE.

26. The method according to claim 25, wherein before the transmitting, by the first UE, the first request to the RAN node, the method further comprises:
transmitting, by the first UE, a third request through an interface between UE, wherein the third request is used for requesting aggregation transmission for the first UE; and
receiving, by the first UE, a confirmation message fed back by the second UE, wherein the confirmation message carries the identifier of the second UE.

27. The method according to claim 25, wherein after the transmitting, by the first UE, the first request to the RAN node, the method further comprises:
receiving, by the first UE, a reconfiguration message transmitted by the RAN node, wherein the reconfiguration message carries first configuration information, and the first configuration information is used for configuring the bearer for multi-UE cooperative transmission for the first UE; and
applying, by the first UE, the first configuration information for reconfiguration.

28. The method according to claim 27, wherein the first configuration information comprises: the identifier of the second UE, and configuration information of a bearer architecture.

29. The method according to claim 28, wherein the first configuration information further comprises: a third DRB identifier for indicating a service bearer for multi-UE cooperative transmission configured for the first UE.

30. The method according to any one of claims 27 to 29, wherein after the receiving, by the first UE, the reconfiguration message transmitted by the RAN node, the method further comprises:
receiving a second reconfiguration command transmitted by the RAN node, wherein the second reconfiguration command carries the identifier of the second UE, a reconfigured first bearer identifier and reconfigured content information, and a bearer corresponding to a first bearer identifier is the bearer for multi-UE cooperative transmission; and
executing the second reconfiguration command.

31. The method according to claim 30, wherein before the receiving the second reconfiguration command transmitted by the RAN node, the method further comprises:
transmitting a modification request to the RAN node, wherein the modification request is used for requesting modification of the bearer corresponding to the first bearer identifier.

32. The method according to any one of claims 27 to 29, wherein after the receiving, by the first UE, the reconfiguration message transmitted by the RAN node, the method further comprises:
receiving a second release command transmitted by the RAN node, wherein the second release command carries the identifier of the second UE, a released second bearer identifier and released content information, and a bearer corresponding to a second bearer identifier is the bearer for multi-UE cooperative transmission; and
executing the second release command to release the bearer corresponding to the second bearer identifier.

33. The method according to claim 32, wherein before the receiving the second release command transmitted by the RAN node, the method further comprises:
transmitting a release request to the RAN node, wherein the release request is used for requesting release of the bearer corresponding to the second bearer identifier.

34. The method according to any one of claims 25 to 29, wherein the first request also carries second service identification information, and the second service identification information is used for indicating service information of the first UE expecting multi-UE cooperative transmission.

35. The method according to claim 34, wherein the second service identification information comprises at least one of the following:
a first DRB identifier;
a service identifier;
a QoS flow identifier; and
service feature information.

36. A method for responding to multi-UE cooperative transmission, comprising:
receiving, by second UE, second configuration information transmitted by an RAN node, wherein the second configuration information is used for indicating bearer configuration of the second UE for multi-UE cooperative transmission for first UE; and
applying, by the second UE, the second configuration information to transmit a configuration completion message to the RAN node in the case of agreeing multi-UE cooperative transmission for the first UE.

37. The method according to claim 36, wherein the second configuration information comprises: an identifier of the first UE, and configuration information of a split bearer.

38. The method according to claim 37, wherein the second configuration information further comprises: a second DRB identifier for indicating a service bearer of the second UE for multi-UE cooperative transmission for the first UE.

39. The method according to claim 38, wherein before the receiving, by the second UE, the second configuration information transmitted by the RAN node, the method further comprises:
receiving, by the second UE, a third request transmitted by the first UE, wherein the third request is used for requesting aggregation transmission for the first UE; and
feeding back, by the second UE, a confirmation message to the first UE, wherein the confirmation message carries an identifier of the second UE.

40. The method according to any one of claims 36 to 39, wherein after the transmitting the configuration completion message to the RAN node, the method further comprises:
receiving a first reconfiguration command transmitted by the RAN node, wherein the first reconfiguration command carries an identifier of the first UE, a reconfigured first bearer identifier and reconfigured content information, and a bearer corresponding to a first bearer identifier is a bearer for multi-UE cooperative transmission; and
executing the first reconfiguration command.

41. The method according to claim 40, wherein before the receiving the first reconfiguration command transmitted by the RAN node, the method further comprises:
transmitting a modification request to the RAN node, wherein the modification request is used for requesting modification of the bearer corresponding to the first bearer identifier.

42. The method according to any one of claims 36 to 39, wherein after the transmitting the configuration completion message to the RAN node, the method further comprises:
receiving a first release command transmitted by the RAN node, wherein the first release command carries an identifier of the first UE, a released second bearer identifier and released content information, and a bearer corresponding to a second bearer identifier is a bearer for multi-UE cooperative transmission; and
executing the first release command to release the bearer corresponding to the second bearer identifier.

43. The method according to claim 42, wherein before the receiving the first release command transmitted by the RAN node, the method further comprises:
transmitting a release request to the RAN node, wherein the release request is used for requesting release of the bearer corresponding to the second bearer identifier.

44. An apparatus for configuring a bearer, comprising:
a first obtaining module, configured to obtain first configuration information of first UE, wherein the first configuration information is used for configuring a bearer for multi-UE cooperative transmission; and
a first transceiver module, configured to transmit the first configuration information to the first UE.

45. An apparatus for configuring multi-UE cooperative transmission, comprising:
a second obtaining module, configured to obtain association information, wherein the association information is used for indicating that first UE and second UE have an association, and the first UE and the second UE have an ability to establish multi-UE cooperative transmission; and
a second transceiver module, configured to transmit the association to an RAN node.

46. An apparatus for requesting multi-UE cooperative transmission, comprising:
a first determining module, configured to determine that first UE needs to execute multi-UE cooperative transmission; and
a third transceiver module, configured to transmit a first request to an RAN node, wherein the first request is used for requesting the RAN node to configure a bearer for multi-UE cooperative transmission for the first UE, and the first request carries an identifier of second UE.

47. An apparatus for responding to multi-UE cooperative transmission, comprising:
a fourth transceiver module, configured to receive second configuration information transmitted by an RAN node, wherein the second configuration information is used for indicating bearer configuration of the second UE for multi-UE cooperative transmission for the first UE, and
a second determining module, configured to determine whether to agree multi-UE cooperative transmission for the first UE; and
the fourth transceiver module is further configured to allow the second UE to apply the second configuration information to transmit a configuration completion message to the RAN node in the case of agreeing multi-UE cooperative transmission for the first UE.

48. A network side device, comprising a processor, a memory, and a program or an instruction stored in the memory and executable on the processor, wherein the program or instruction, when executed by the processor, implements the steps of the bearer configuration method according to any one of claims 1 to 20, or implements the steps of the method for configuring multi-UE cooperative transmission according to any one of claims 21 to 24.

49. A terminal, comprising a processor, a memory, and a program or an instruction stored in the memory and executable on the processor, wherein the program or instruction, when executed by the processor, implements the steps of the method for requesting multi-UE cooperative transmission according to any one of claims 25 to 35, or implements the steps of the method for responding to multi-UE cooperative transmission according to any one of claims 36 to 43.

50. A readable storage medium, storing a program or an instruction, wherein the program or instruction, when executed by the processor, implements the steps of the bearer configuration method according to any one of claims 1 to 20, or implements the steps of the method for configuring multi-UE cooperative transmission according to any one of claims 21 to 24, or implements the steps of the method for requesting multi-UE cooperative transmission according to any one of claims 25 to 35, or implements the steps of the method for responding to multi-UE cooperative transmission according to any one of claims 36 to 43.
